# EUROPEAN PATENT APPLICATION

(11) **EP 1 612 921 A1**
(43) Date of publication of application: **04.01.2006**
(21) Application number: 04720996.0
(22) Date of filing: 16.03.2004
(51) Int. Cl.: H02N 2/08

(54) **ULTRASONIC FLOAT-UP DEVICE**

(30) Priority: 17.03.2003 JP 2003071439
(71) Applicant: IAI Corporation, Shimizu-shi, Shizuoka 424-0102 (JP)
(72) Inventor: NAKAMURA, Kentaro, Tokyo 1940022 (JP); Fijinaga, Teruaki, Shizuoka-shi, Shizuoka 4240102 (JP)
(74) Representative: Grünecker, Kinkeldey, Stockmair & Schwanhäusser Anwaltssozietät
(86) International application number: PCT/JP2004/003465
(87) International publication number: WO 2004/084396

(57) **Abstract**

An ultrasonic levitation device having a fixed section and a movable section disposed to be movable relative to the fixed section, the fixed section or movable section having a vibration generating device disposed therein to generate ultrasonic vibrations, thereby allowing the movable section to levitate on a levitation surface, wherein all or part of a fixed section-side guide disposed in the fixed section is formed convex or concave in the levitation direction, while all or part of a movable section-side guide disposed in the movable section is formed concave or convex in the levitation direction, the movable section-side guide being opposed to and disposed on the fixed section-side guide.

## Description

### TECHNICAL FIELD

The present invention relates to an ultrasonic levitation device. In particular, the present invention relates to the ultrasonic levitation device comprising an improved structure of guide mechanism, which accomplishes the down-sizing of device and also improves the levitating stability.

### BACKGROUND ART

An ultrasonic levitation device, using ultrasonic vibration, has a contact-free mechanism and is free from environmental pollution due to abrasion or lubrication agent, and is considered to be appropriate for clean room environment or precision positioning purposes. There are several examples of this type of ultrasonic levitation device, such as those disclosed under Patent Document 1 and Patent Document 2 as shown below:
Patent Document 1: Japanese Unexamined Patent Publication No. Hei 7-196127; and
Patent Document 2: Japanese Unexamined Patent Publication No.
Hei 11-301832.

However, the conventional ultrasonic levitation devices discussed as above have the following problems.

According to the conventional ultrasonic levitation devices as disclosed in Japanese Unexamined Patent Publication No. Hei 7-196127 and Japanese Unexamined Patent Publication No. Hei 11-301832, in particular, there is no disclosure of any structure that is accompanied by linear movement guiding mechanism, and when the application of these inventions are intended, it will be impossible to accomplish the movement in a desirous direction with maintaining the stable levitating of a movable section.

Further, according to the "Langevin type" of ultrasonic transducer as disclosed in Japanese Unexamined Patent Publication No. Hei 7-196127, the height of the device would become taller, and therefore it would be impossible to reduce the size of device.

The taller shape of this device would also cause another problem of higher gravity center of a slider (movable section), which would spoil the stability of movement.

In the light of the above problems, it is an object of the present invention to provide an ultrasonic levitation device, which is provided with linear movement guiding mechanism without requiring any complicated structure, and which also improves the levitating stability and levitating rigidity without requiring the large-sizing of the device.

### DISCLOSURE OF INVENTION

To achieve the objects mentioned above, according to claim 1 of the present invention, there is provided an ultrasonic levitation device having: a fixed section; a movable section disposed to be movable relative to the fixed section; and a vibration generating device disposed in the fixed section or movable section in order to generate ultrasonic vibrations so that the movable section may levitate on a levitation surface, wherein, all or part of a fixed section-side guide disposed in the fixed section is formed convex or concave in a levitation direction, while all or part of a movable section-side guide disposed in the movable section is formed concave or convex in the levitation direction, whereby the movable section-side guide being opposed to and disposed on the fixed section-side guide.

According to claim 2 of the present invention, there is provided the ultrasonic levitation device as claimed in claim 1, wherein: all or part of the fixed section-side guide disposed in the fixed section is formed spike-shape convex or inverted spike-shape concave in the levitation direction, while all or part of the movable section-side guide disposed in the movable section is formed inverted spike-shape concave or spike-shape convex in the levitation direction, whereby the movable section-side guide being opposed to and disposed on the fixed section-side guide.

According to claim 3 of the present invention, there is provided the ultrasonic levitation device as claimed in claim 1, wherein: all or part of the fixed section-side guide disposed in the fixed section is formed substantially isosceles trapezoidal convex of which top being shorter than base, or formed substantially isosceles trapezoidal concave of which top being longer than base, in the levitation direction, while all or part of the movable section-side guide disposed in the movable section is formed substantially isosceles trapezoidal concave of which top being longer than base, or formed substantially isosceles trapezoidal convex of which top being shorter than base, in the levitation direction, whereby the movable section-side guide being opposed to and disposed on the fixed section-side guide.

According to claim 4 of the present invention, there is provided the ultrasonic levitation device as claimed in any one claim of claims 1 through 3, wherein: sets of guides comprising the fixed section-side guide and the movable section-side guide are disposed not less than two.

According to claim 5 of the present invention, there is provided the ultrasonic levitation device as claimed in any one claim of claims 1 through 4, wherein: the vibration generating devices are disposed not less than two.

According to claim 6 of the present invention, there is provided the ultrasonic levitation device as claimed in any one claim of claims 1 through 5, wherein: vibration converting member is used for the vibration generating device.

According to claim 7 of the present invention, there is provided the ultrasonic levitation device as claimed in claim 6, wherein: the vibration converting member is integrated with the fixed section-side guide or the movable section-side guide.

According to claim 8 of the present invention, there is provided the ultrasonic levitation device as claimed in claim 7, wherein: the vibration converting member is substantially in rectangular hollow shape.

According to claim 9 of the present invention, there is provided the ultrasonic levitation device as claimed in claim 8, wherein: a vibration generating source of the vibration generating device is disposed inside the vibration converting member substantially in rectangular hollow shape.

According to claim 10 of the present invention, there is provided the ultrasonic levitation device as claimed in any one claim of claims 1 through 9, wherein: Langevin type ultrasonic transducer or sheet lamination type piezoelectric element or single sheet piezoelectric element is used as the vibration generating source of the vibration generating device.

According to claim 11 of the present invention, there is provided the ultrasonic levitation device as claimed in any one claim of claims 5 through 10, wherein: vibration phase difference has been given between not less than two vibration generating devices to each other.

And according to claim 12 of the present invention, there is provided the ultrasonic levitation device as claimed in claim 11, wherein: the vibration phase difference is at an angle of substantially 90 degrees or substantially 270 degrees.

Accordingly, in the case of the ultrasonic levitation device of the present invention, all or part of the fixed section-side guide disposed in the fixed section is formed convex or concave in the levitation direction, while all or part of the movable section-side guide disposed in the movable section is formed concave or convex in the levitation direction, so that the movable section-side guide may be opposed to and disposed on the fixed section-side guide. Thus, the ultrasonic levitation device may serve as an effective linear guide.

Preferably, all or part of the fixed section-side guide disposed in the fixed section may be formed spike-shape convex or inverted spike-shape concave in the levitation direction, while all or part of the movable section-side guide disposed in the movable section may be formed inverted spike-shape concave or spike-shape convex in the levitation direction, so that the movable section-side guide may be opposed to and disposed on the fixed section-side guide. Further, all or part of the fixed section-side guide disposed in the fixed section may also be formed substantially isosceles trapezoidal convex of which top being shorter than base, or formed substantially isosceles trapezoidal concave of which top being longer than base, in the levitation direction, while all or part of the movable section-side guide disposed in the movable section may also be formed substantially isosceles trapezoidal concave of which top being longer than base, or formed substantially isosceles trapezoidal convex of which top being shorter than base, in the levitation direction, so that the movable section-side guide may be opposed to and disposed on the fixed section-side guide. In particular, according to the latter structure, since there is no peak of spike-shape convex, it is not necessary to secure high dimensional accuracy at the peak of spike-shape convex and the corresponding inverted spike-shape concave.

Preferably, not less than two sets of guides, comprising the fixed section-side guide and the movable section-side guide, may be disposed, whereby the ultrasonic levitation device according to the present invention may become low-profiled, and the rolling of the ultrasonic levitation device may also be prevented.

Preferably, not less than two vibration generating devices may be provided, whereby the rigidity of the fixed section may be reinforced, and the output per vibration generating device may be reduced.

Where the vibration converting member is used for the vibration generating device, the ultrasonic levitation device according to the present invention may further become low-profiled.

Preferably, the vibration converting member may be integrated with the fixed section-side guide or the movable section-side guide, whereby the number of component parts may be reduced, and the assembling accuracy margin may also be improved.

Preferably, the vibration converting member may be substantially in rectangular hollow shape, and the vibration generating source of the vibration generating device may also be disposed inside the vibration converting member substantially in rectangular hollow shape. Thus, the down-sizing of the ultrasonic levitation device according to the present invention may be accomplished.

For example, Langevin type ultrasonic transducer, sheet lamination type piezoelectric element, or single sheet piezoelectric element, may be used as the vibration generating source of the vibration generating device.

Where the vibration phase difference has been given between not less than two vibration generating devices to each other, the standing wave may be suppressed, which may effectively cope with precision positioning. Further, where the vibration phase difference is set at an angle of substantially 90 degrees or substantially 270 degrees, the generation of thrust may be expected.

### BRIEF DESCRIPTION OF DRAWINGS

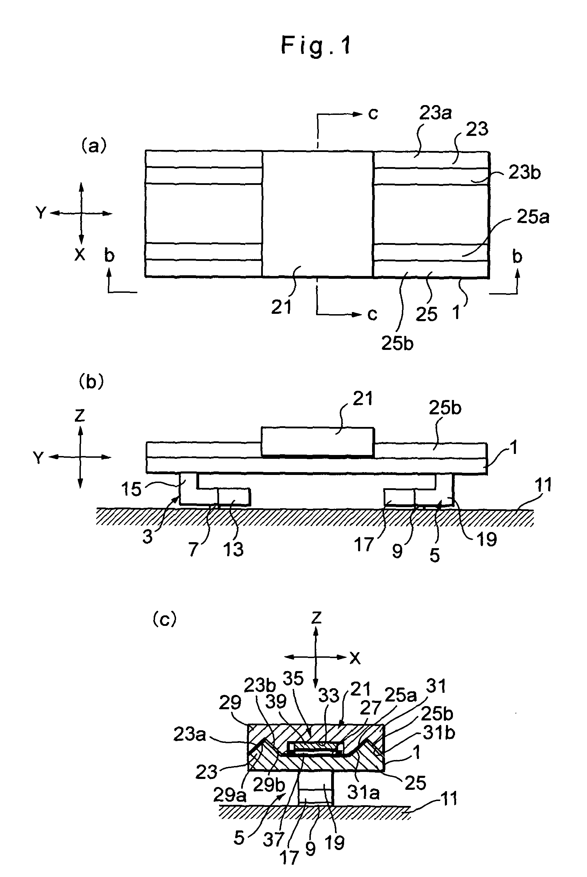

Figure 1 has several views showing a structure of a first embodiment of the present invention, wherein Fig. 1 (a) is a plan view of an ultrasonic levitation device, Fig. 1 (b) is a view as seen by the arrows b - b of Fig. 1 (a), and Fig. 1 (c) is a sectional view cut along the line c - c of Fig. 1 (a);

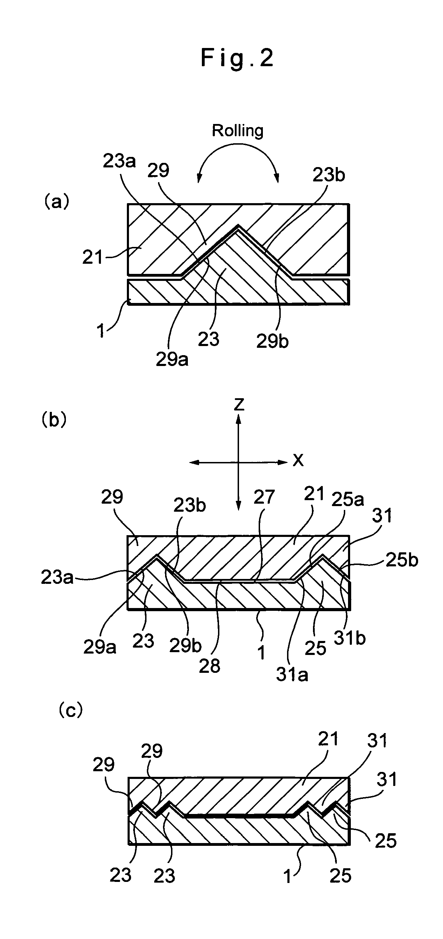

Figure 2 has several views according to the first embodiment of the present invention, wherein Fig. 2 (a) is a cross section view showing overall structure of the ultrasonic levitation device having a single guide, Fig. 2 (b) is a cross section view showing overall structure of the ultrasonic levitation device having two guides, and Fig. 2 (c) is a cross section view showing overall structure of the ultrasonic levitation device having four guides;

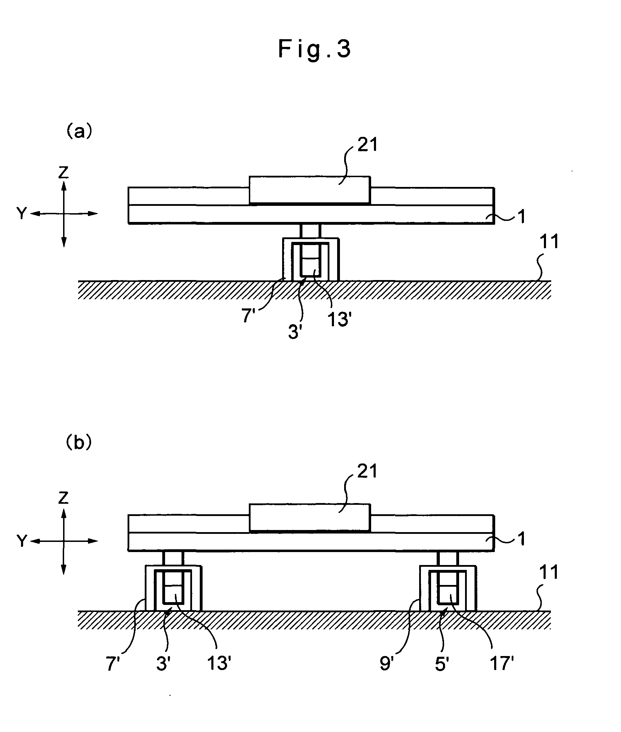

Figure 3 has several views showing comparative examples used for explanation of the first embodiment of the present invention, wherein Fig. 3 (a) is a side view of an ultrasonic levitation device having a single vibration generating device and using no vibration direction converting member, and Fig. 3 (b) is a side view of an ultrasonic levitation device having two vibration generating devices and using no vibration direction converting member;

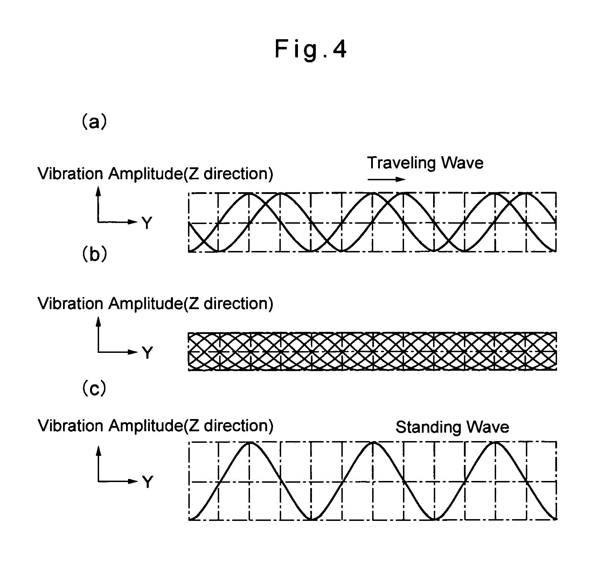

Figure 4 has several charts according to the first embodiment of the present invention, wherein Fig. 4 (a) is a waveform chart explaining about vibration amplitude and also explaining about traveling wave, Fig. 4 (b) is a waveform chart explaining about vibration amplitude when phase difference has been given to two vibration generating devices, and Fig. 4 (c) is a waveform chart explaining about vibration amplitude when phase difference is not given to two vibration generating devices;

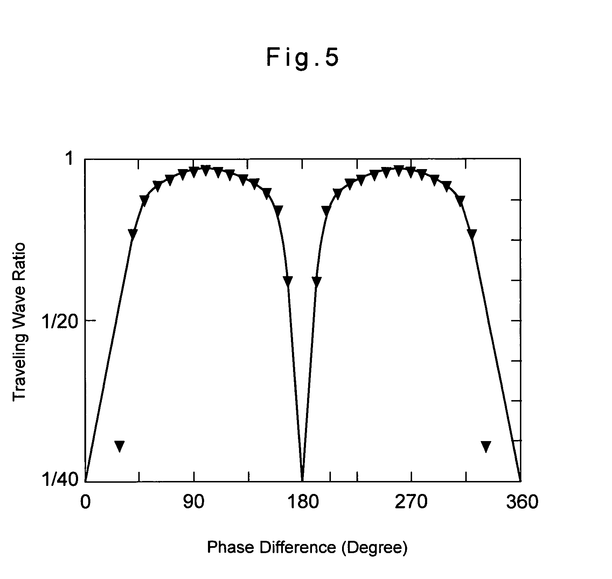

Figure 5 is a chart according to the first embodiment of the present invention showing relation between traveling wave ratio and phase difference;

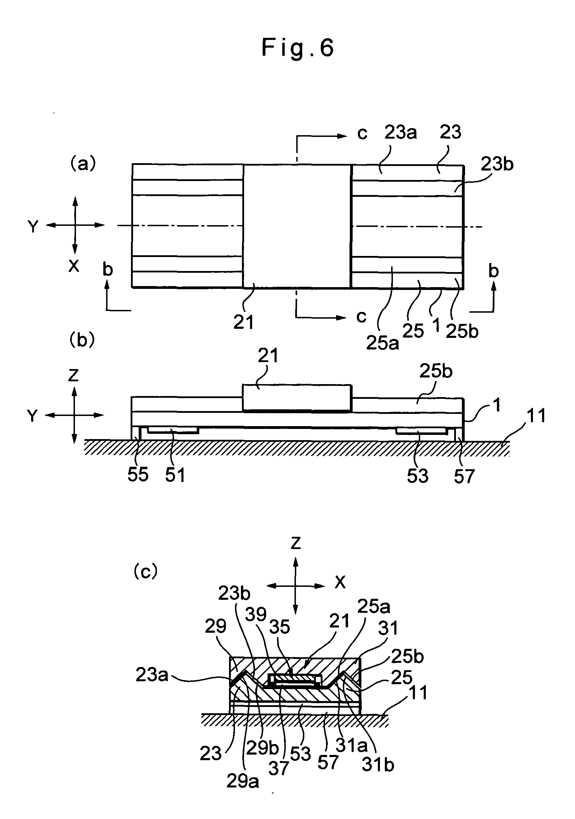

Figure 6 has several views showing a structure of a second embodiment of the present invention, wherein Fig. 6 (a) is a plan view of an ultrasonic levitation device, Fig. 6 (b) is a view as seen by the arrows b - b of Fig. 6 (a), and Fig. 6 (c) is a sectional view cut along the line c - c of Fig. 6 (a);

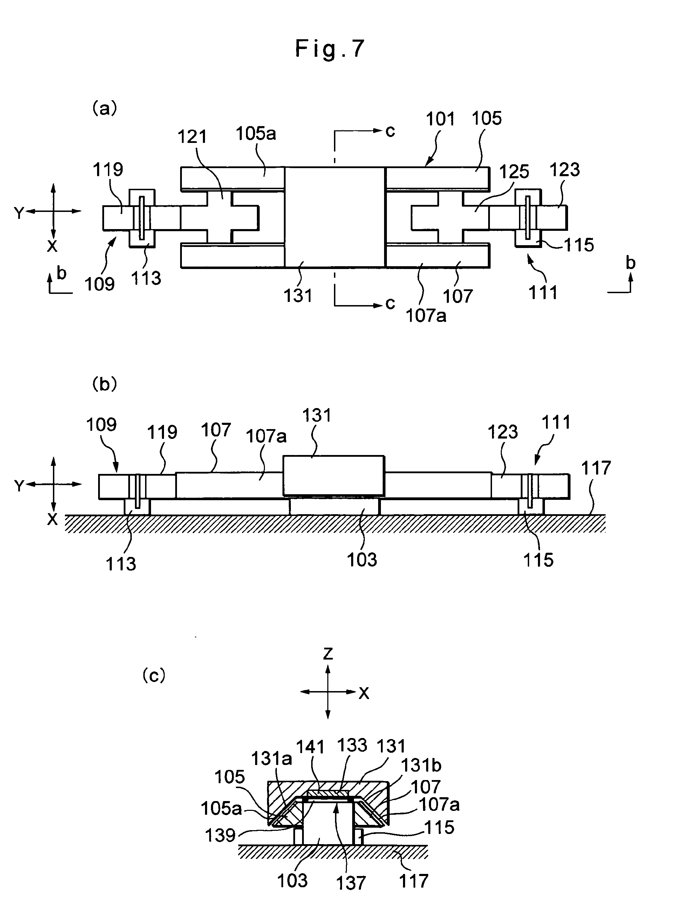

Figure 7 has several views showing a structure of a third embodiment of the present invention, wherein Fig. 7 (a) is a plan view of an ultrasonic levitation device, Fig. 7 (b) is a view as seen by the arrows b - b of Fig. 7 (a), and Fig. 7 (c) is a sectional view cut along the line c - c of Fig. 7 (a);

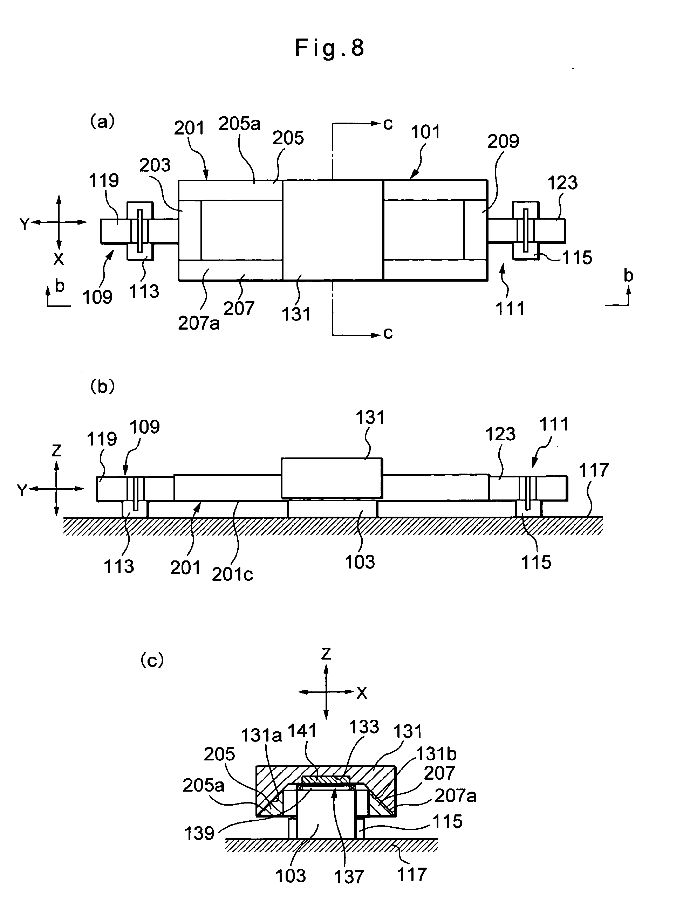

Figure 8 has several views showing a structure of a fourth embodiment of the present invention, wherein Fig. 8 (a) is a plan view of an ultrasonic levitation device, Fig. 8 (b) is a view as seen by the arrows b - b of Fig. 8 (a), and Fig. 8 (c) is a sectional view cut along the line c - c of Fig. 8 (a); and

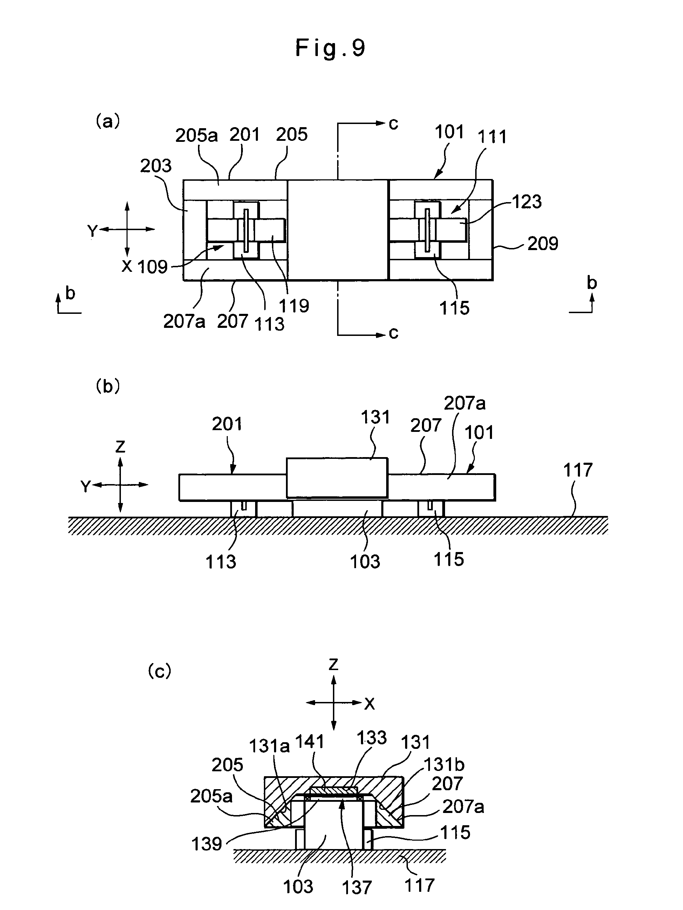

Figure 9 has several views showing a structure of a fifth embodiment of the present invention, wherein Fig. 9 (a) is a plan view of an ultrasonic levitation device, Fig. 9 (b) is a view as seen by the arrows b - b of Fig. 9 (a), and Fig. 9 (c) is a sectional view cut along the line c - c of Fig. 9 (a).

### BEST MODE FOR CARRYING OUT THE INVENTION

A first embodiment of the present invention will be explained with reference to Figs. 1 through 5. Fig. 1 has several views showing a structure of a first embodiment of the present invention, wherein Fig. 1 (a) is a plan view of an ultrasonic levitation device, Fig. 1 (b) is a view as seen by the arrows b - b of Fig. 1 (a), and Fig. 1 (c) is a sectional view cut along the line c - c of Fig. 1 (a).

There is a fixed section 1 in a flat panel shape. There are also vibration generating devices 3, 5, respectively attached to the left end part and the right end part in the elongating direction, on the bottom surface of the fixed section 1. There are supporting members 7, 9, respectively attached to the vibration generating devices 3, 5, whereby the fixed section 1 is mounted on a base 11 via the supporting members 7, 9.

The vibration generating device 3 comprises a Langevin type ultrasonic transducer 13 and an L-shaped vibration direction converting member 15. Similarly, the vibration generating device 5 comprises a Langevin type ultrasonic transducer 17 and an L-shaped vibration direction converting member 19. In the present embodiment, the Langevin type ultrasonic transducers 13, 17 are disposed to be oriented horizontally, so that the ultrasonic device may become low-profiled. Although the Langevin type ultrasonic transducers 13, 17 generate ultrasonic vibrations in horizontal direction, these vibrations are converted into those in vertical direction by the L-shaped vibration direction converting members 15, 19.

There is a movable section 21 being levitated above the fixed section 1. As illustrated in Fig. 1 (c), the fixed section 1 has two fixed section-side guides 23, 25, respectively disposed on the right and left in cross-sectional direction of the fixed section 1. As also illustrated in Fig. 1 (c), the fixed section-side guide 23 has been formed as spike-shape convex protruding in upward direction of Fig. 1 (c). In other words, the spike-shape convex has been formed by two slant surfaces 23a, 23b. As illustrated in Fig. 1 (a), the fixed section-side guide 23 has been formed in the elongating direction of the fixed section 1. Also, the other fixed section-side guide 25 is substantially in the same structure, forming the spike-shape convex by two slant surfaces 25a, 25b. There is a flat surface 27 provided between the fixed section-side guide 23 and the other fixed section-side guide 25.

With reference to the movable section 21, as illustrated in Fig. 1 (c), there are movable section-side guides 29, 31, respectively corresponding to the fixed section-side guides 23, 25. The movable section-side guide 29 has been formed as inverted spike-shape concave intruding in downward direction of Fig. 1 (c). In other words, the inverted spike-shape concave has been formed by two slant surfaces 29a, 29b. Also, the other movable section-side guide 31 is substantially in the same structure, forming the inverted spike-shape concave by two slant surfaces 31a, 31b. There is a recessed section 33 formed between the movable section-side guide 29 and the other movable section-side guide 31.

There is a voice coil motor 35, serving as a driver, disposed between the fixed section 1 and the movable section 21. As illustrated in Fig. 1 (c), there is a coil 37 mounted on the flat surface 27 of the fixed section 1, and there is also a permanent magnet 39 mounted on the recessed section 33 of the movable section 21, thus the coil 37 and the permanent magnet 39 serve as the driving voice coil motor 35. When electric current is applied to the coil 37 in an appropriate direction, according to interaction with the flow of magnetic flux of the permanent magnet 39 based on Fleming's Left Hand Rule, the driving force is generated so that the movable section 21 may move along the fixed section 1 in any Y axis direction.

The overall structure of the ultrasonic levitation device according to the present embodiment has been discussed as above, and now the detailed explanation will be made by also referring to the functions thereof. First, the fixed section-side guides 23, 25, and the movable section-side guides 29, 31 will be explained with reference to Fig. 2.

Fig. 2 (a) shows an example in which a single fixed section-side guide 23 and a single movable section-side guide 29 have been disposed by opposing to each other. In this case, when the fixed section 1 makes ultrasonic vibration, the pressure in the air space, between the pair of the slant surfaces 23a, 23b of the fixed section-side guide 23, and the pair of the slant surfaces 29a, 29b of the movable section-side guide 29, will increase, whereby the movable section 21 levitates. The height of the levitation of the movable section 21, i.e. the position of the movable section 21 in Z axis direction (in vertical direction of Fig. 2), is determined by the pressure in the air space and the weight of the movable section 21. On the other hand, since the fixed section-side guide 23 and the movable section-side guide 29 are formed by the respective slant surfaces, when the movable section 21 moves along the fixed section 1 in Y axis direction (in the right angle direction of the sheet of this drawing), there is almost no change of position in X axis direction (in horizontal direction of this drawing), whereby these guides serve as so-called "linear guide" mechanism.

According to the present embodiment, it is also possible to provide two sets of guides, i.e. the fixed section-side guides 23, 25, and the movable section-side guides 29, 31, which are respectively opposed to and disposed on the fixed section-side guides 23, 25, as illustrated in Fig. 2 (b). Consequently, when these two sets of guides are provided, if the total area of the levitating surfaces is the same, the height of each slant surface may be reduced to the half thereof, whereby the ultrasonic levitation device may become low-profiled. Further, it is also possible to improve stability against so-called "rolling" (stability against rotative movement as shown in the drawing). According to the case of Fig. 2 (a) in which there is only a single set of guides, there is a considerable risk of rolling. On the other hand, in the case of Fig. 2 (b) in which there are two sets of guides, such a rolling may be prevented effectively. Further, the air space at a flat surface 28 of the movable section 21 is compressed against the flat surface 27 of the fixed section 1, whereby the levitating force is also generated against the movable section 21.

As discussed above, according to the present embodiment, there are two sets of guides, comprising the fixed section-side guides 23, 25, and the movable section-side guides 29, 31, which are respectively opposed to and disposed on the fixed section-side guides 23, 25. However, the present embodiment is not limited to the above structures. For example, as illustrated in Fig. 2 (c), it is possible to provide four sets of guides, and more sets of guides may also be provided. The multiple sets of guides may contribute to low-profiling of the ultrasonic levitation device of the present invention.

According to the present embodiment, the fixed section 1 has the convex shape, and the movable section 21 has the concave shape, but it is also possible to provide the reversed structure.

Now the explanation will be made in regard to the number of vibration generating devices, with reference to Fig. 3. In principle, as illustrated in Fig. 3 (a), as long as the moving distance (stroke) of the movable section 21 is not long, it is sufficient to provide only a single vibration generating device 3'. However, if the stroke should be elongated, the rigidity of the fixed section 1 should be reinforced in order to prevent deflection of the fixed section 1. For the purpose of reinforcing the rigidity of the fixed section 1, the thickness of the fixed section 1 may be increased, but this would also increase the height of the fixed section 1, which would contradict to low-profiling of the ultrasonic levitation device. Thus, as illustrated in Fig. 3 (b), by providing two vibration generating devices 3', 5', the supporting points may increase, whereby the rigidity of the fixed section 1 may be reinforced without increasing the height of the fixed section 1. Further, when these two vibration generating devices 3', 5' are provided, the required output per vibration generating device may be substantially the half, thus small-size and low-output model may be used for each vibration generating device.

It should be noted that, the structure of the vibration generating devices 3', 5' of Fig. 3 (b) is different from that of the vibration generating devices 3, 5 of the present embodiment. According to the vibration generating devices 3', 5' of Fig. 3 (b), Langevin type ultrasonic transducers 13', 17' are disposed, respectively elongating in Z axis direction, so that the vibration may be generated in Z axis direction. This structure is intentionally provided for the purpose of the following explanation.

As discussed above, the vibration generating devices 3, 5 of the present embodiment respectively use the vibration direction converting members 15, 19, whereby contributing to low-profiling of the ultrasonic levitation device. This low-profiling effect may also be explained from the viewpoint of Fig. 3. In the case of the vibration generating devices 3', 5' shown in Fig. 3, as discussed above, the Langevin type ultrasonic transducers 13', 17' are respectively disposed so as to generate vibration in vertical direction of Fig. 3, i.e. in Z axis direction. Therefore, the overall height of the ultrasonic levitation device would be increased.

On the other hand, according to the present embodiment, the Langevin type ultrasonic transducers 13, 17 of the vibration generating device 3, 5 are respectively disposed so as to generate vibration in horizontal direction, and the direction of such a vibration is then converted into vertical direction by the L-shaped vibration direction converting members 15, 19. Thus, the low-profiling of the ultrasonic levitation device may be accomplished.

Now the explanation will be made in regard to the phase of the vibration generating devices 3, 5 with reference to Fig. 4. According to the present embodiment, the phase difference has been given between these two vibration generating devices 3 and 5 to each other. If this is not the case, for example, if the phase difference is not given between these two vibration generating devices 3 and 5 to each other, the waveform as shown in Fig. 4 (c), namely "standing wave" will be obtained. The standing wave is in resonant state, having large vibration amplitude, which might be advantageous for obtaining large levitating force. However, since the vibration amplitude is not constant, and varies depending on the position of the fixed section 1 in Y axis direction. Consequently, when the movable section 21 moves along the fixed section 1, the levitating force would vary accordingly. This factor is problematic for serving as ultraprecision positioning guide.

On the other hand, according to the present embodiment as discussed above, the phase difference has been given between these two vibration generating devices 3 and 5 to each other, of which waveform is as shown in Fig. 4 (b). According to Fig. 4 (b), there is no standing wave of Fig. 4 (c), thus the variation of vibration amplitude, depending on the position of the fixed section 1 in Y axis direction, may become smaller. Consequently, the variation of the levitating force, depending on the position in Y axis direction, may also become smaller, which is remarkably suitable for precision positioning.

Fig. 5 illustrates several experimental results regarding traveling wave ratio (traveling wave / standing wave) in relation to the phase difference between these two vibration generating devices 3 and 5. Fig. 5 is a chart showing the variation of traveling wave ratio in relation to the variation of phase difference, in which the lateral axis shows the phase difference, and the longitudinal axis shows the traveling wave ratio. As illustrated in Fig. 5, when the phase difference is approximately at an angle of "0 degree" and "180 degrees", the generated vibration is almost standing wave, and the traveling wave is only about 1/40 of the standing wave. On the other hand, when the phase difference is approximately at an angle of "90 degrees" and at an angle of "270 degrees", the traveling wave ratio is almost "1", which means that the proportion of traveling wave is very high. Therefore, when the phase difference is set at an angle of approximately "90 degrees" or "270 degrees", it is possible to generate stable traveling wave. Accordingly, the stable standing wave of the fixed section 1 generated as above, applies the thrust to the movable section 21 via the air space between the fixed section 1 and the movable section 21, whereby the movable section 21 may move along the fixed section 1. Fig. 4 (a) shows the vibration amplitude in Y axis direction, in such a state.

Consequently, even when there is no driving device provided separately, it is possible to drive the movable section 21, by setting the phase difference between the vibration generating devices 3 and 5, as "at an angle of substantially 90 degrees" or "at an angle of substantially 270 degrees". For reference, when the phase difference is at an angle of 90 degrees, if the movable section 21 moves to the right in Y axis direction, the movable section 21 will move to the left in Y axis direction by changing the phase difference to an angle of 270 degrees. Thus, it is also possible to control the moving direction of the movable section 21.

Where more than two vibration generating devices are used, the desired phase difference may be given only between the vibration generating devices at the both end positions. As for the other vibration generating devices, the proportional allotment based on the phase difference between the both end positions may be done, according to the distance from the vibration generating devices at the both end positions. For example, where three vibration generating devices are used by giving 90-degree-angle phase difference between the both end positions, it is appropriate to give the half of the set 90-degree-angle phase difference, i.e. 45-degree-angle phase difference, to the third vibration generating device positioned at the center.

The present embodiment has the following merits.

First, the fixed section-side guides 23, 25, respectively in convex shape, are provided on the fixed section 1, and the movable section-side guides 29, 31, respectively in concave shape, are also provided on the movable section 21, so that the movable section-side guide 21 may be opposed to and disposed on the fixed section-side guide 1. Therefore, it is possible to obtain an ultrasonic levitation device, effectively serving as a linear guide.

Second, there are two sets of guides, i.e. the fixed section-side guides 23, 25, and the movable section-side guides 29, 31, whereby the overall height may be reduced. Thus, the low-profiling and down-sizing of the ultrasonic levitation device may be accomplished, and further the rolling of the movable section 21 may also be prevented.

Third, there are two vibration generating devices 3, 5, whereby the rigidity of the fixed section 1 may be reinforced without increasing the height of the fixed section 1. Further, the output per vibration generating device may be reduced.

Fourth, the L-shaped vibration direction conversion members are used for the vibration generating devices 3, 5, whereby the low-profiling of the ultrasonic levitation device may also be accomplished.

Fifth, the phase difference has been given between these two vibration generating devices 3 and 5 to each other, which may effectively cope with precision positioning.

Sixth, the phase difference, given between these two vibration generating devices 3 and 5, is substantially at an angle of 90 degrees or substantially at an angle of 270 degrees, thus the thrust may be applied to the movable section 21 without requiring any special driving device.

Now a second embodiment of the present invention will be explained with reference to Fig. 6. Although the first embodiment has been discussed by using Langevin type ultrasonic transducer as an example of vibration generating device, according to the second embodiment, there are single sheet piezoelectric transducers 51, 53, respectively in flat panel shape, serving as the vibration generating devices. The fixed section 1 is supported by supporting members 55, 57, respectively formed separately from the single sheet piezoelectric transducers 51, 53.

The other structure is substantially the same as that of the first embodiment as discussed above, and the identical numerals are allotted to the identical elements, and the explanation thereof will not be made.

The second embodiment may also serve substantially the same effect as that of the first embodiment. Further, because of the single sheet piezoelectric transducers 51, 53 in flat panel shape, further low-profiling of the ultrasonic levitation device may be accomplished.

Now a third embodiment of the present invention will be explained with reference to Fig. 7. Fig. 7 has several schematic views showing a structure of a third embodiment of the present invention, wherein Fig. 7 (a) is a plan view of an ultrasonic levitation device, Fig. 7 (b) is a view as seen by the arrows b - b of Fig. 7 (a), and Fig. 7 (c) is a sectional view cut along the line c - c of Fig. 7 (a).

There is a fixed section 101, provided with a vibration converting member 121 and another vibration converting member 125. The fixed section 101 is also provided with fixed section-side guides 105, 107, respectively disposed on the both sides of the vibration converting members 121, 125. There are also vibration generating devices 109, 111, respectively attached to the vibration converting members 121, 125 of the fixed section 101, in the space between the fixed section-side guides 105, 107 and at the left end part and the right end part in the elongating direction of the fixed section 101. There are supporting members 113, 115, respectively attached to the vibration generating devices 109, 111, whereby the fixed section 101 is mounted on a base 117 via the supporting members 113, 115 of the vibration generating devices 109, 111.

As discussed above, the vibration converting members 121, 125 serve, not only as the structural elements of the fixed section 101, but also as the structural elements of the vibration generating devices 109, 111.

The vibration generating device 109 comprises a Langevin type ultrasonic transducer 109 and a cross-shaped vibration direction converting member 121. Similarly, the vibration generating device 111 comprises a Langevin type ultrasonic transducer 123 and a cross-shaped vibration direction converting member 125. When the ultrasonic vibration is generated by the Langevin type ultrasonic transducers 119, 123, the cross-shaped vibration direction converting members 121, 125 convert the direction of the generated ultrasonic vibration into two perpendicular directions, whereby the ultrasonic vibration is given to the fixed section-side guides 105, 107.

There is a movable section 131 being levitated above the fixed section 101. Further, the fixed section 101 has slant surfaces 105a, 107a, respectively formed on the fixed section-side guides 105, 107. As illustrated in the cross-sectional view of Fig. 7 (c), the slant surfaces 105a, 107a form substantially isosceles trapezoidal convex of which top is shorter than base.

On the other hand, with reference to the movable section 131, there are slant surfaces 131a, 131b, opposing to the slant surfaces 105a, 107a. Thus, the movable section 131 and the fixed section-side guides 105, 107 have the concave-convex relation, forming substantially isosceles trapezoidal concave and convex each of which tops being shorter than bases. This is because of the following reason.

With reference to the first and second embodiments, the concave-convex relation between the fixed section 1 and the movable section 21 is in spike-shape, but in such structure, it is necessary to secure high dimensional accuracy at the peak of spike-shape convex and the corresponding inverted spike-shape concave. In other words, if there is very minor dimensional error, the movable section 21 would collide with the fixed section 1. On the other hand, according to the third embodiment in which the movable section 131 and the fixed section-side guides 105, 107 have the concave-convex relation, forming substantially isosceles trapezoidal concave and convex each of which tops being shorter than bases, there is no spike-shape peaks, thus it is sufficient to secure only the surface accuracy (flatness, angle and straightness) of the slant surfaces 105a, 107a, 131a, 131b forming the above isosceles trapezoidal concave and convex. Thus, the machining efficiency may be facilitated, and the machining cost may be reduced. Further, the stability may be improved against any disturbance such as dimensional distortion due to thermal expansion.

There is a recessed section 133 disposed in the movable section 131. Further, at the center of the fixed section in Y axis direction, only the fixed section-side guides 105, 107 are provided, and in the space between the fixed section-side guides 105, 107 at this position, there is a coil base 103 mounted on the base 117. The coil base 103 has a coil 139 mounted thereon. The coil 139, and a permanent magnet 141 disposed on the recessed section 133, serve a driving voice coil motor 137.

When electric current is applied to the coil 139 in an appropriate direction, according to interaction with the flow of magnetic flux of the permanent magnet 141 based on Fleming's Left Hand Rule, the driving force is generated so that the movable section 131 may move along the fixed section 1 in any Y axis direction.

According to the third embodiment as discussed above, substantially the same effect as those of the first and second embodiments can be accomplished. Further, because the movable section 131 and the fixed section-side guides 105, 107 have the concave-convex relation, forming substantially isosceles trapezoidal concave and convex each of which tops being shorter than bases, it is not necessary to secure high dimensional accuracy at the peaks of spike-shape convex and concave according to the first and second embodiments. On the other hand, according to the third embodiment, it is sufficient to secure only the surface accuracy (flatness, angle and straightness) of the slant surfaces 105a, 107a, 131a, 131b forming the above isosceles trapezoidal concave and convex. Thus, the machining efficiency may be facilitated, and the machining cost may be reduced. Further, the stability may be improved against any disturbance such as dimensional distortion due to thermal expansion.

According to the third embodiment, although there is only single set of substantially isosceles trapezoidal concave and convex guides provided as an example, it is also possible to provide two or more sets of these concave-convex guides.

Now a fourth embodiment of the present invention will be explained with reference to Fig. 8. Referring back to Fig. 7, the third embodiment has the structure in which the pair of fixed section-side guides 105, 107, and the pair of cross-shaped vibration converting members 121, 125 have been assembled. In such structure, the assembling dimensional accuracy of the fixed section 101 is determined by the sum of dimensional accuracy and the sum of the assembling dimensional error of each element, i.e. the fixed section-side guides 105, 107 and the cross-shaped vibration converting members 121, 125.

On the other hand, according to the fourth embodiment, as illustrated in Fig. 8, there is a fixed section-side guide 201 substantially in rectangular hollow shape, whereby the ultrasonic vibration may be transmitted to the fixed section 101 without using the cross-shaped vibration converting members 121, 125, which have been used in the third embodiment.

The structure of the fourth embodiment will be explained in detail. As illustrated in Fig. 8, when ultrasonic vibration, generated by a vibration generating source 109, is given to a shorter side 203 (on the left side of Fig. 8) of the fixed section-side guide 201 substantially in rectangular hollow shape, longer sides 205, 207 of the fixed section-side guide 201 substantially in rectangular hollow shape make ultrasonic vibration. Similarly, when ultrasonic vibration, generated by a vibration generating source 111, is given to a shorter side 209 (on the right side of Fig. 8) of the fixed section-side guide 201 substantially in rectangular hollow shape, the longer sides 205, 207 of the fixed section-side guide 201 substantially in rectangular hollow shape also make ultrasonic vibration.

The longer sides 205, 207 of the fixed section-side guide 201 respectively have slant surfaces 205a, 207a, so that the fixed section-side guide 201 and the movable section 131 may have the concave-convex relation, forming substantially isosceles trapezoidal concave and convex each of which tops being shorter than bases, likewise the fixed section-side guides 105, 107 of the third embodiment.

According to the fourth embodiment, the vibration generating sources 109, 111 are respectively provided on the right and left, but it is not necessary to provide two vibration generating sources merely for the purpose of generating ultrasonic vibration. According to the fourth embodiment, these two vibration generating sources 109, 111 generate vibration in the common phase, so that the input vibration power may become double.

The other structure is substantially the same as that of the third embodiment as discussed above, and the identical numerals are allotted to the identical elements, and the explanation thereof will not be made.

The fourth embodiment may also serve substantially the same effect as that of the third embodiment. Further, because of the fixed section-side guide 201 substantially in rectangular hollow shape, formed by integrating the cross-shaped vibration converting members and the fixed section-side guides as discussed in the third embodiment, further preciseness of the ultrasonic levitation device may be accomplished.

Now a fifth embodiment of the present invention will be explained with reference to Fig. 9. In the fifth embodiment, as compared with the fourth embodiment, the vibration generating sources 109, 111 are disposed inside the fixed section-side guide 201 substantially in rectangular hollow shape. Thus, further down-sizing of the ultrasonic levitation device may be accomplished.

The present invention is of course not limited to the first through fifth embodiment as discussed above.

For example, the vibration generating device is not limited to Langevin type ultrasonic transducer or single sheet piezoelectric element, and for example, sheet lamination type piezoelectric element may be used.

Further, there is no limitation as to the number of guides.

According to the above embodiments, the driving by voice coil motor has been explained as an example. However, the present invention is not limited to the driving by voice coil motor, and for example, driving by linear motor may be done.

The other structures shown in drawing are merely for explanation purposes, and any modification and alteration thereof may be made as long as it is not departing from the spirit of the present invention.

### INDUSTRIAL APPLICABILITY

As above discussed, the present invention relates to the ultrasonic levitation device, in which the down-sizing and stable levitating performance may be accomplished by improving the structure of guide mechanism. For example, the present invention is suitable for various positioning devices.

## Claims

1. An ultrasonic levitation device having:
a fixed section;
a movable section disposed to be movable relative to said fixed section; and
a vibration generating device disposed in said fixed section or movable section in order to generate ultrasonic vibrations so that said movable section may levitate on a levitation surface, wherein,
all or part of a fixed section-side guide disposed in said fixed section is formed convex or concave in a levitation direction, while all or part of a movable section-side guide disposed in said movable section is formed concave or convex in said levitation direction, whereby said movable section-side guide being opposed to and disposed on said fixed section-side guide.

2. The ultrasonic levitation device as claimed in claim 1, wherein:
all or part of said fixed section-side guide disposed in said fixed section is formed spike-shape convex or inverted spike-shape concave in said levitation direction, while all or part of said movable section-side guide disposed in said movable section is formed inverted spike-shape concave or spike-shape convex in said levitation direction, whereby said movable section-side guide being opposed to and disposed on said fixed section-side guide.

3. The ultrasonic levitation device as claimed in claim 1, wherein:
all or part of said fixed section-side guide disposed in said fixed section is formed substantially isosceles trapezoidal convex of which top being shorter than base, or formed substantially isosceles trapezoidal concave of which top being longer than base, in said levitation direction, while all or part of said movable section-side guide disposed in said movable section is formed substantially isosceles trapezoidal concave of which top being longer than base, or formed substantially isosceles trapezoidal convex of which top being shorter than base, in said levitation direction, whereby said movable section-side guide being opposed to and disposed on said fixed section-side guide.

4. The ultrasonic levitation device as claimed in any one claim of claims 1 through 3, wherein:
sets of guides comprising said fixed section-side guide and said movable section-side guide are disposed not less than two.

5. The ultrasonic levitation device as claimed in any one claim of claims 1 through 4, wherein:
said vibration generating devices are disposed not less than two.

6. The ultrasonic levitation device as claimed in any one claim of claims 1 through 5, wherein:
vibration converting member is used for said vibration generating device.

7. The ultrasonic levitation device as claimed in claim 6, wherein:
said vibration converting member is integrated with said fixed section-side guide or said movable section-side guide.

8. The ultrasonic levitation device as claimed in claim 7, wherein:
said vibration converting member is substantially in rectangular hollow shape.

9. The ultrasonic levitation device as claimed in claim 8, wherein:
a vibration generating source of said vibration generating device is disposed inside said vibration converting member substantially in rectangular hollow shape.

10. The ultrasonic levitation device as claimed in any one claim of claims 1 through 9, wherein:
Langevin type ultrasonic transducer or sheet lamination type piezoelectric element or single sheet piezoelectric element is used as said vibration generating source of said vibration generating device.

11. The ultrasonic levitation device as claimed in any one claim of claims 5 through 10, wherein:
vibration phase difference has been given between said not less than two vibration generating devices to each other.

12. The ultrasonic levitation device as claimed in claim 11, wherein:
said vibration phase difference is at an angle of substantially 90 degrees or substantially 270 degrees.
